# EUROPÄISCHE PATENTSCHRIFT

(11) **EP 0 387 520 B1**
(45) Veröffentlichungstag und Bekanntmachung des Hinweises auf die Patenterteilung: **12.05.1993**
(21) Anmeldenummer: 90102167.5
(22) Anmeldetag: 03.02.1990
(51) Int. Cl.: G01B 11/00, G01B 11/02, G01D 5/26

(54) **Positionsmesseinrichtung**
Position-measuring installation
Dispositif de mesure de la position

(30) Priorität: 24.02.1989 DE 3905730
(43) Veröffentlichungstag der Anmeldung: 19.09.1990
(73) Patentinhaber: Dr. Johannes Heidenhain GmbH, D-83292 Traunreut (DE)
(72) Erfinder: Michel, Dieter, Dipl.-Ing. (FH), D-8220 Traunstein (DE); Spanner, Erwin, Dipl.-Phys, D-8220 Traunstein (DE)

(56) Entgegenhaltungen:
- CH-A- 401 500
- DE-A- 2 003 492
- DE-A- 3 633 574
- DE-A- 3 816 247

## Beschreibung

Die Erfindung bezieht sich auf eine lichtelektrische Positionsmeßeinrichtung nach dem Oberbegriff des Anspruches 1.

Derartige Positionsmeßeinrichtungen sind aus einer Vielzahl von Druckschriften bekannt. Als Beispiel sei von der DE-OS 36 33 574 ausgegangen, in der Winkelmeßeinrichtungen beschrieben sind. Eines der Ausführungsbeispiele zeigt zwei Linearteilungen zur Umlenkung der positiven und negativen Beugungsstrahlen. Zur Gewinnung der Meßsignale werden Interferenzen der positiven und der negativen Beugungsstrahlen einer Ordnung ausgewertet.

In der Dissertation "Dreigitterschrittgeber" von J. Willhelm, 1978, Technische Universität Hannover, Seite 52, ist ein sogenannter "Viergittergeber" mit hoher Empfindlichkeit, bezogen auf die Gitterkonstante, beschrieben. Dort dient ein 120° - Prisma zur Umlenkung der gebeugten Teilstrahlenbündel. Als vorteilhaft wird dort angegeben, daß Ein- und Austrittsfeld getrennt sind, sodaß sich innere Reflexe nicht störend auswirken.

Nachteilig ist bei derartigen Anordnungen die sogenannte Moiré-Empfindlichkeit. Es treten Störungen auf, die auf der Empfindlichkeit der Positionsmeßeinrichtung gegenüber Verdrehungen der Beugungsgitter zueinander beruhen.

[Siehe auch DE-A-3816247]

Der vorliegenden Erfindung liegt die Aufgabe zugrunde, eine hochauflösende, einfach aufgebaute Positionsmeßeinrichtung der beschriebenen Gattung zu schaffen, bei der die Auswertung interferierender Strahlenbündel zu phasenverschobenen Signalen mit sehr gutem Modulationsgrad führt, und die unempfindlich gegen Verdrehungen und Verkippungen der optischen Bauelemente zueinander ist.

Diese Aufgabe wird von einer Positionsmeßeinrichtung mit den Merkmalen des Anspruches 1 gelöst.

Die Vorteile der erfindungsgemäßen Positionsmeßeinrichtung liegen im einfachen Aufbau und in der Möglichkeit, relativ große Anbautoleranzen zuzulassen. Die Justierung der Bauteile ist einfach.

Mit Hilfe der Zeichnungen wird die Erfindung anhand von stark vereinfachten Ausführungsbeispielen näher erläutert. Die dargestellten Abtastbereiche sind Bestandteile von an sich hinreichend bekannten Positionsmeßeinrichtungen. Die relevanten optischen Bauelemente sind zum einfacheren Verständnis nur zweidimensional dargestellt, da eine räumliche Darstellung - vor allem der Strahlengänge - zu unübersichtlich werden würde.

Es zeigt
- Figur 1a: einen Abtastbereich einer Längenmeßeinrichtung in stark schematisierter Form;
- Figur 1b: eine Variante der Anordnung gemäß Figur 1a;
- Figur 2: noch eine Variante der Anordnung gemäß Figur 1;
- Figur 3: eine weitere Variante der Anordnung gemäß Figur 1;
- Figur 4: einen Abtastbereich mit schräg einfallendem Beleuchtungsstrahlengang;
- Figur 5: einen Abtastbereich mit zusätzlichen optischen Elementen;
- Figur 6: eine Gegenüberstellung zweier Ausführungsbeispiele;
- Figur 7a: eine Auflicht-Ausführung in Seitenansicht;
- Figur 7b: eine Draufsicht auf die Anordnung gemäß Figur 7a;
- Figur 8a: eine andere Version einer Auflicht-Ausführungsform in Seitenansicht;
- Figur 8b: eine Draufsicht auf die Anordnung gemäß Figur 8a;
- Figur 9a bis Figur 9h: verschiedene Alternativlösungen für Auflichtversionen und
- Figur 10a und Figur 10b: Varianten der Ablenk- und Aufspaltelemente

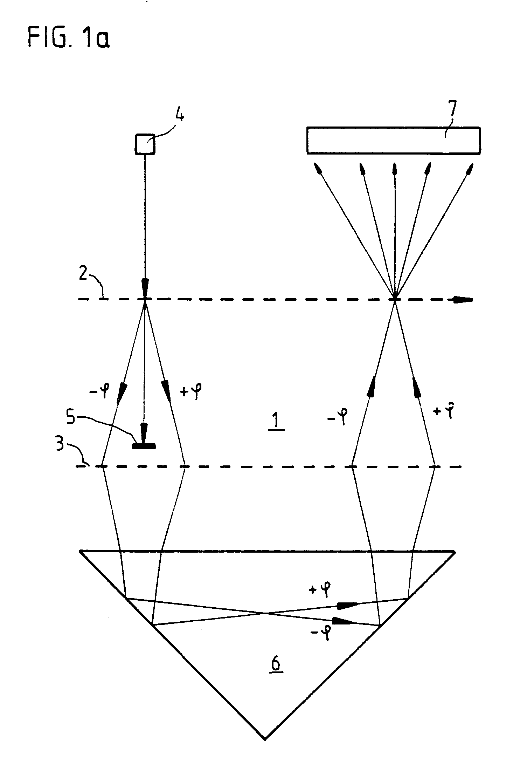

In Figur 1a sind Elemente einer Positionsmeßeinrichtung 1 gezeigt, bei der auf die Darstellung allgemein bekannter Details verzichtet wurde.

An einem der nicht dargestellten, relativ zueinander beweglichen Objekte ist ein Beugungsgitter in Form eines Phasengitters 2 befestigt. Das Objekt bewegt sich mit dem Phasengitter 2 parallel zu einem ebenfalls nicht dargestellten zweiten Objekt. An diesem zweiten Objekt ist ebenfalls ein Beugungsgitter 3 befestigt.

Von einer Beleuchtungseinrichtung- vorzugsweise einem Laser 4 - wird Licht ausgesendet und am Phasengitter 2 gebeugt. Gebeugte Teilstrahlenbündel -φ und +φ treffen auf das zweite Beugungsgitter 3 und werden abermals gebeugt. Die 0. Beugungsordnung wird mittels einer Blende 5 ausgeblendet, bevor dieses Teilstrahlenbündel auf das zweite Beugungsgitter 3 auftrifft.

Dem zweiten Beugungsgitter 3 ist ein sogenanntes retroreflektierendes Element nachgeordnet. Solche Elemente sind an sich bekannt und für dieses Ausführungsbeispiel ist ein Tripelspiegel 6 gewählt worden. Das Beugungsgitter 3 und der Tripelspiegel 6 sind so aufeinander abgestimmt, daß sich die Teilstrahlenbündel -φ und +φ in einem einzigen Punkt schneiden. Nach dem Austritt aus dem Tripelspiegel 6 werden die Teilstrahlenbündel -φ und +φ beim Durchtritt durch das Beugungsgitter 3 wieder gebeugt und treffen auf das Phasengitter 2, wo sie nochmals gebeugt werden. Die interferierenden und gebeugten Teilstrahlenbündel treffen auf eine Detektoreinrichtung 7, von der sie in Meßsignale umgewandelt werden, die zueinander phasenverschoben sind.

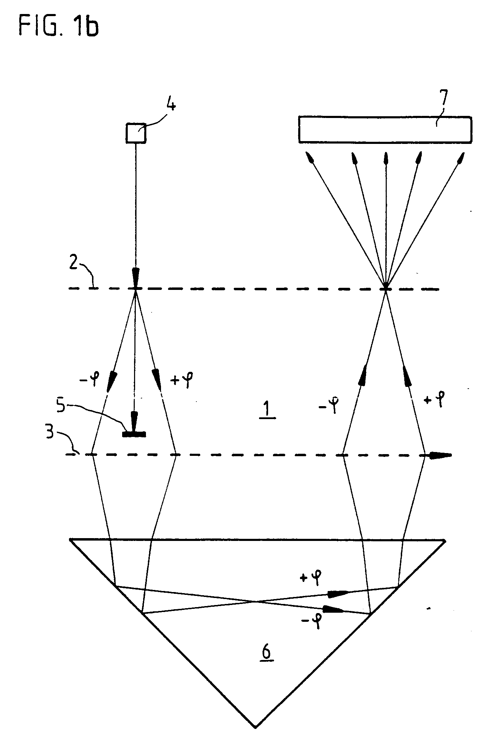

Die in Figur 1b dargestellte Version unterscheidet sich von der vorbeschriebenen Ausführungsform nur dadurch, daß nicht das Phasengitter 2, sondern das Beugungsgitter 3 bewegt wird, was durch den Pfeil am Beugungsgitter 3 kenntlich gemacht ist. Dadurch soll deutlich gemacht werden, daß nicht erfindungswesentlich ist, welches der Gitter bewegt wird.

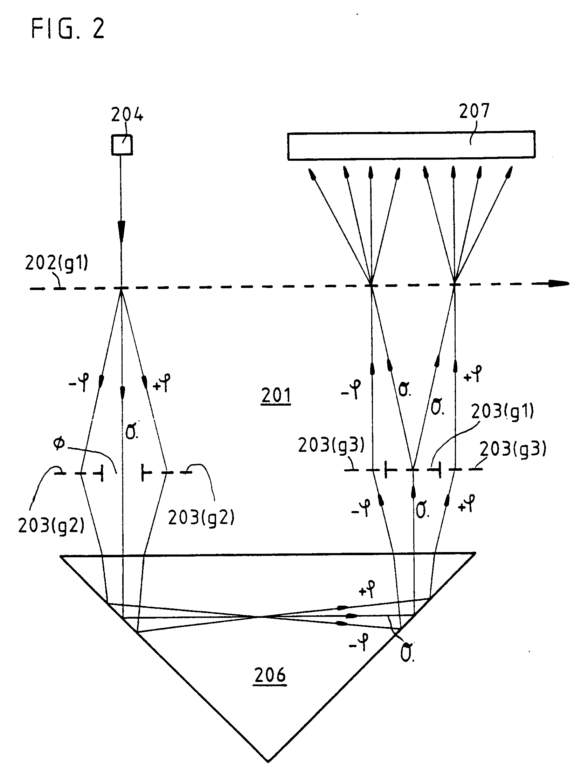

In Figur 2 ist eine Variante einer Positionsmeßeinrichtung 201 dargestellt. Das von einem Laser 204 ausgesendete Lichtbündel wird an einem ersten Beugungsgitter 202 gebeugt, das eine Gitterkonstante g1 aufweist. Einem Tripelprisma 206 ist ein zweites Beugungsgitter 203 zugeordnet. Dieses Beugungsgitter 203 weist in den Bereichen, in denen vom Beugungsgitter 202 gebeugte Teilstrahlenbündel -φ und +φ auftreffen eine Gitterkonstante g2 auf, die von der Gitterkonstante g1 des ersten Beugungsgitters 202 abweicht. In dem Bereich, in dem die 0. Beugungsordnung auf das Beugungsgitter 203 auftrifft, ist ein beugungsoptisch neutraler Bereich vorgesehen, was durch eine Aussparung 0̸ im Gitter 203 deutlich gemacht ist. Die Teilstrahlenbündel -φ, 0. und +φ werden im Tripelprisma 206 so reflektiert, daß sie sich wieder in einem Punkt schneiden. Die aus dem Tripelprisma 206 austretenden Teilstrahlenbündel durchlaufen wieder das zweite Beugungsgitter 203, an welchem sie erneut gebeugt werden. In dem Bereich, in dem die 0. Beugungsordnung durch das Beugungsgitter 203 tritt, weist dieses eine Gitterkonstante g1 auf, die identisch mit der Gitterkonstanten g1 des Beugungsgitters 202 ist. Dieser Bereich ist daher mit 203(g1) bezeichnet.

Die Bereiche des Beugungsgitters 203, durch die die Teilstrahlenbündel -φ und +φ treten, weisen eine Gitterkonstante g3 auf, die von den Gitterkonstanten g1 und g2 abweichen. Diese Bereiche sind mit 203(g3) bezeichnet. Die am Beugungsgitter 203 nochmals gebeugten Teilstrahlenbündel -φ, 0. und +φ werden am Beugungsgitter 202 erneut gebeugt, interferieren und treffen auf eine Detektoreinrichtung 207, von der sie in zueinander phasenverschobene Meßsignale umgewandelt werden.

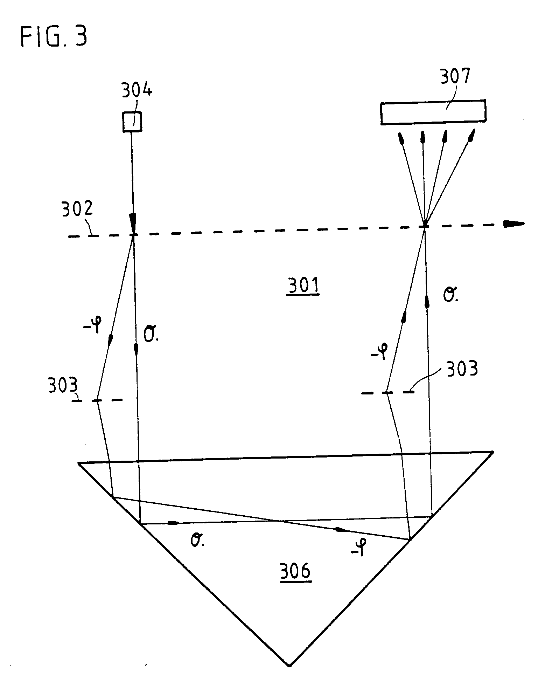

Ein weiteres Ausführungsbeispiel ist in Figur 3 dargestellt. Am ersten Beugungsgitter 302 erfolgt die Aufspaltung des vom Laser 304 ausgesendeten Lichtbündels in Teilstrahlenbündel -φ und 0.. Vom zweiten Beugungsgitter 303 werden die Teilstrahlenbündel -φ und 0. so gebeugt, daß sie sich im Tripelprisma 306 wiederum in einem einzigen Punkt schneiden. Nach Verlassen des Tripelprismas 306 werden die Teilstrahlenbündel -φ und 0. beim Durchtreten durch das Beugungsgitter 303 wieder gebeugt und fallen parallel zu ihrer Einfallsrichtung auf das Beugungsgitter 302, wo sie nach der Beugung interferieren. Die austretenden Teilstrahlenbündel werden von einer Detektoreinrichtung 307 empfangen und zu Meßsignalen umgeformt, die zueinander phasenverschoben sind.

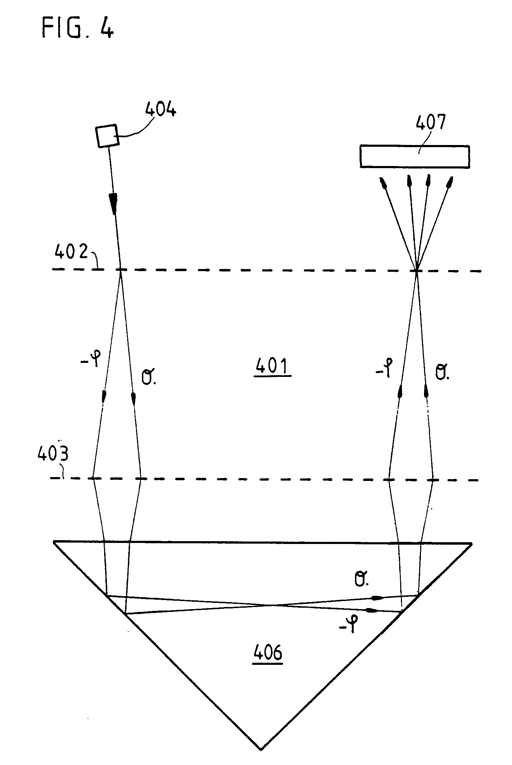

Bei dem in Figur 4 gezeigten Ausführungsbeispiel ist der Einfallswinkel des vom Laser 404 auf das erste Beugungsgitter 402 gerichteten Lichtes abweichend von der Normalen. Durch diese Maßnahme ergibt sich ein symmetrischer Verlauf der Teilstrahlenbündel -φ und 0., was meßtechnische Vorteile hat. Im Übrigen entspricht diese Lösung dem Ausführungsbeispiel aus Figur 3.

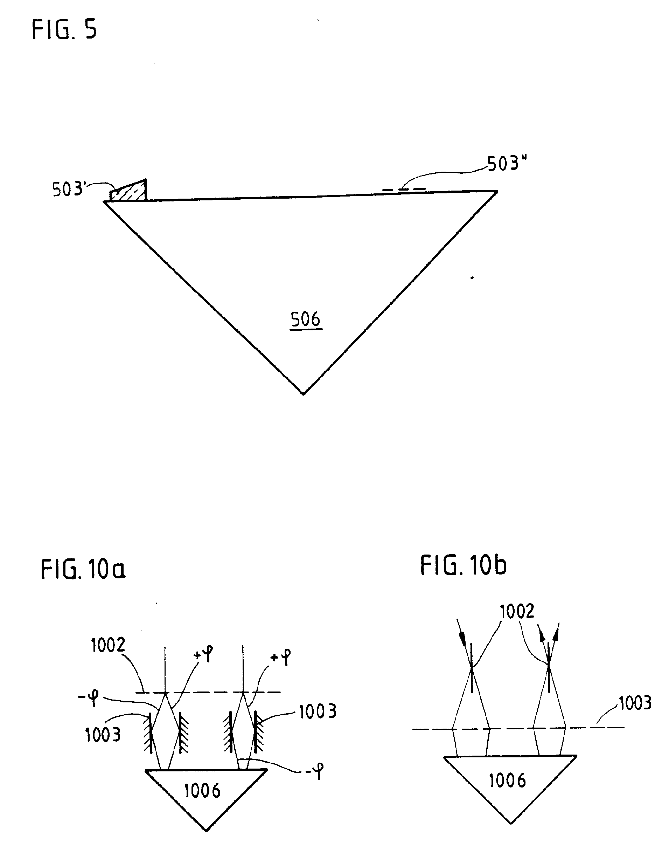

Figur 5 zeigt stellvertretend für alle Ausführungsbeispiele, daß ein retroreflektierendes Element mit einem optisch ablenkenden Element als Prisma 503' oder Gitter 503'' eine Baueinheit 506 bilden kann. Diese Baueinheit 506 vereinigt also die Elemente für die Ablenkung und die Retroreflexion, an die wenigstens ein Beugungsgitter in geeigneter Weise angepaßt ist. In der Praxis kann die Ausführung einer Positionsmeßeinrichtung mit einer derartigen Baueinheit 506 von Bedeutung sein, da sich ein Ablenkgitter oder Prismen auf die Eintrittsfläche eines Tripelprismas aufbringen lassen und dieses Bauteil dann als Standard-Bauteil lagermäßig gehalten werden kann.

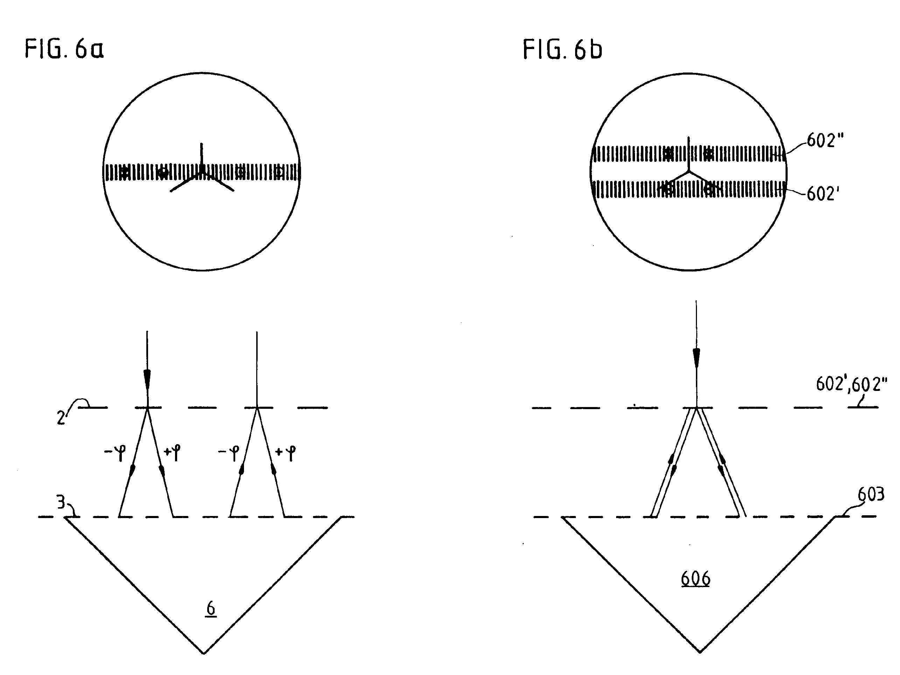

Bei den bisher erörterten Ausführungsbeispielen liegen die Ein- und Austrittsfelder der Strahlenbündel in Meßrichtung hintereinander. Die Erfindung umfaßt jedoch auch Lösungen, bei denen die Ein- und Austrittsfelder in Meßrichtung nebeneinander angeordnet sind. In Figur 6 sind beide Prinzipien gegenübergestellt. Figur 6a zeigt die bereits erläuterte Abtastung, in der Ein- und Austrittsfelder in Meßrichtung hintereinander angeordnet sind. Dies entspricht sinngemäß dem Ausführungsbeispiel aus Figur 1.

Die Figur 6b zeigt den Fall, daß die Ein- und Austrittsfelder parallel nebeneinander liegen. Dazu ist entweder ein breites Beugungsgitter erforderlich, oder aber es werden zwei parallele Beugungsgitter (602',602'') verwendet. Da beide Beugungsgitter (602',602'') relativ zueinander oder miteinander bewegt werden können, kann durch eine derartige Abtastung eine Summen- bzw. Differenzmessung durchgeführt werden. Dabei bleibt die Unempfindlichkeit gegenüber Verdrehungen und/oder Verkippungen erhalten.

Abweichend von den bisher gezeigten Durchlicht-Längenmeßeinrichtungen ist die Erfindung auch als Winkelmeßeinrichtung,sowie bei Auflichtgeräten realisierbar, wie nachstehend anhand einiger Alternativlösungen erläutert wird.

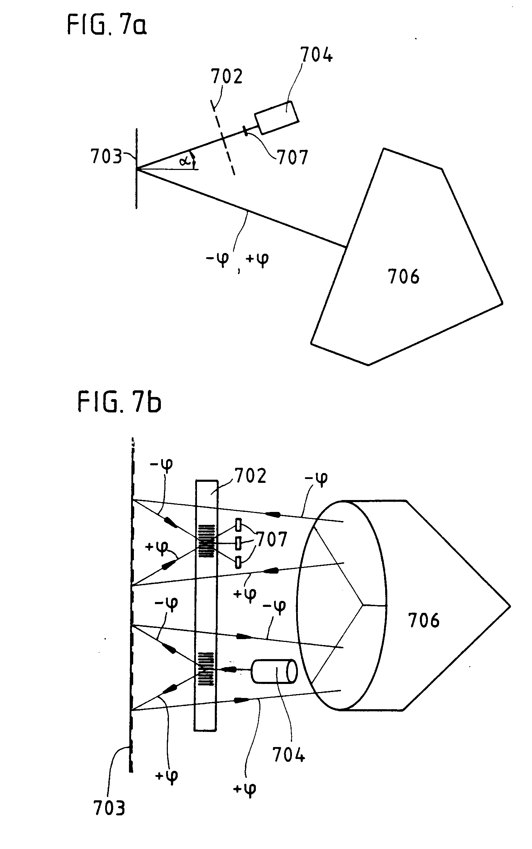

Gemäß Figur 7a beleuchtet ein Laser 704 unter einem Winkel α ein Reflexionsgitter 703, von dem gebeugte Teilstrahlenbündel -φ und +φ in ein Tripelprisma 706 reflektiert werden, was in Figur 7b besser zu erkennen ist.

Die in Figur 7b dargestellte Anordnung entspricht in ihrem Aufbau der Durchlicht-Version aus Figur 1b. Ein Lichtstrahlenbündel vom Laser 704 trifft auf ein Beugungsgitter 702, an dem es in Teilstrahlenbündel -φ und +φ aufgespalten wird. Diese Teil strahlenbündel -φ und +φ werden von dem Reflexionsgitter 703 in das Tripelprisma 706 reflektiert, und zwar mit konvergierenden Strahlengängen. Sie durchlaufen das Tripelprisma 706 und treten mit divergierenden Strahlengängen wieder aus, treffen auf das Reflexionsgitter 703, werden erneut gebeugt und vereinigen sich am Beugungsgitter 702. Dort interferieren sie und werden von einer Detektoreinrichtung 707 detektiert.

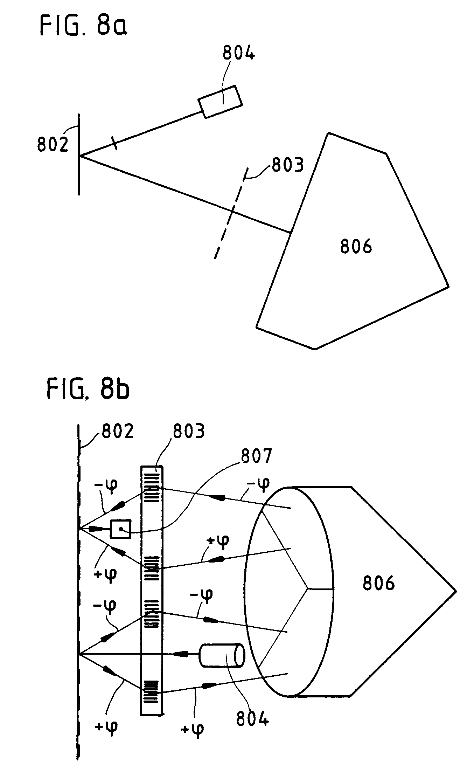

Die in Figur 8 gezeigte Auflichtversion entspricht im Grunde dem Aufbau gemäß Figur 1a. Figur 8a zeigt eine Seitenansicht während in Figur 8b in der Draufsicht nähere Einzelheiten zu erläutern sind.

Der Beleuchtungsstrahl eines Lasers 804 trifft auf ein Reflexionsgitter 802, wird dort gebeugt und es entstehen Teilstrahlenbündel -φ und +φ, die auf ein Beugungsgitter 803 reflektiert werden. Nach nochmaliger Beugung treten sie konvergierend in ein Tripelprisma 806 ein und durchlaufen es in der vorbeschriebenen Weise. Nach dem Austritt aus dem Tripelprisma 806 treffen sie divergierend auf das Beugungsgitter 803, werden gebeugt und treffen auf das Reflexionsgitter 802. Dort werden sie vereinigt, kommen zur Interferenz und die interferierenden Teilstrahlenbündel werden auf Detektoren 807 reflektiert.

Im Gegensatz zum Ausführungsbeispiel gemäß Figur 7 wird der Beleuchtungsstrahl am Reflexionsgitter 802 das erste Mal gebeugt und in Teilstrahlenbündel -φ und +φ aufgespalten.

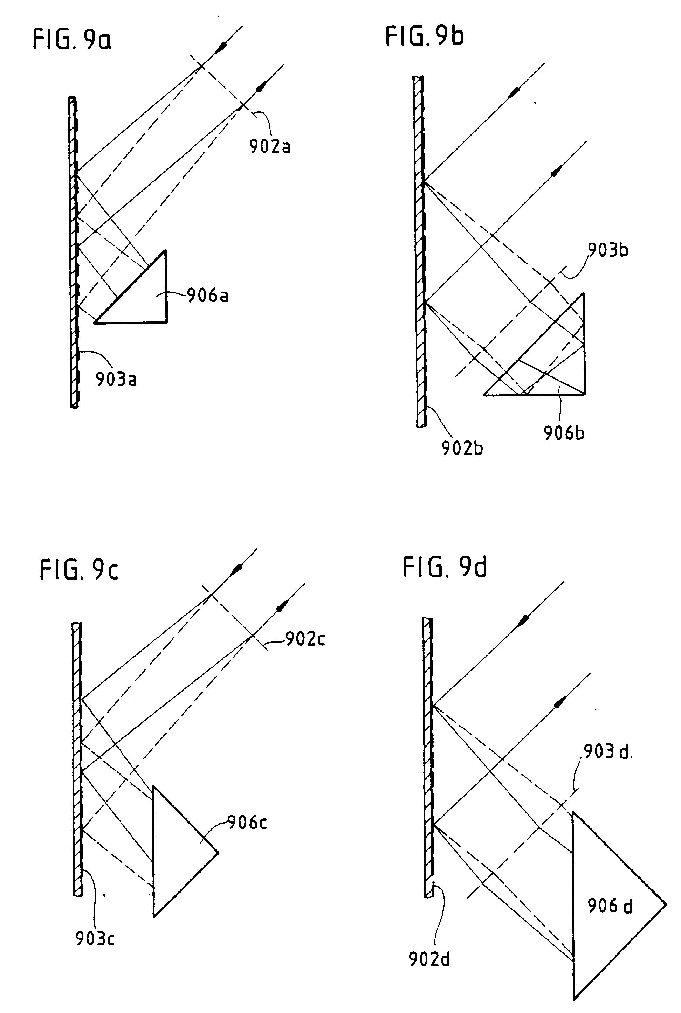

In den Figuren 9a bis 9h ist noch einmal eine Reihe von möglichen Ausführungsformen gegenübergestellt.

Zur Straffung der Beschreibung sind die Beleuchtungseinrichtungen und die Detektoren nicht dargestellt und auch nur die jeweils relevanten Konstellationen beschrieben.

Allen gezeigten Auflichtversionen ist gemeinsam, daß die Beleuchtungsrichtung nicht senkrecht zu der Richtung verläuft, die senkrecht zur Gitternormalen und Strichrichtung des verwendeten Reflexionsgitters ist.

Bei der Anordnung in Figur 9a bilden ein Ablenkgitter 902a und die Basis eines Tripelprismas 906a einen Winkel zur Ebene eines Reflexionsgitters 903a und ebenso zueinander.

Gemäß Figur 9b liegen ein Ablenkgitter 903b und die Basis eines Tripelprismas 906b parallel zueinander, bilden jedoch zur Ebene eines Reflexionsgitters 902b einen Winkel.

Gemäß Figur 9c bildet ein Ablenkgitter 902c einen Winkel zur Ebene eines Reflexionsgitters 903c und zur Basis eines Tripelprismas 906c, wobei die letzteren parallel zueinander verlaufen. Das Ablenkgitter 902c liegt dabei zwischen der nicht dargestellten Beleuchtungseinrichtung und dem Reflexionsgitter 903c.

Die Anordnung gemäß Figur 9d unterscheidet sich von der aus Figur 9c dadurch, daß ein Ablenkgitter 903d zwischen der Ebene eines Reflexionsgitters 902d und der dazu parallelen Basis eines Tripelprismas 906d liegt und zu diesen einem Winkel bildet.

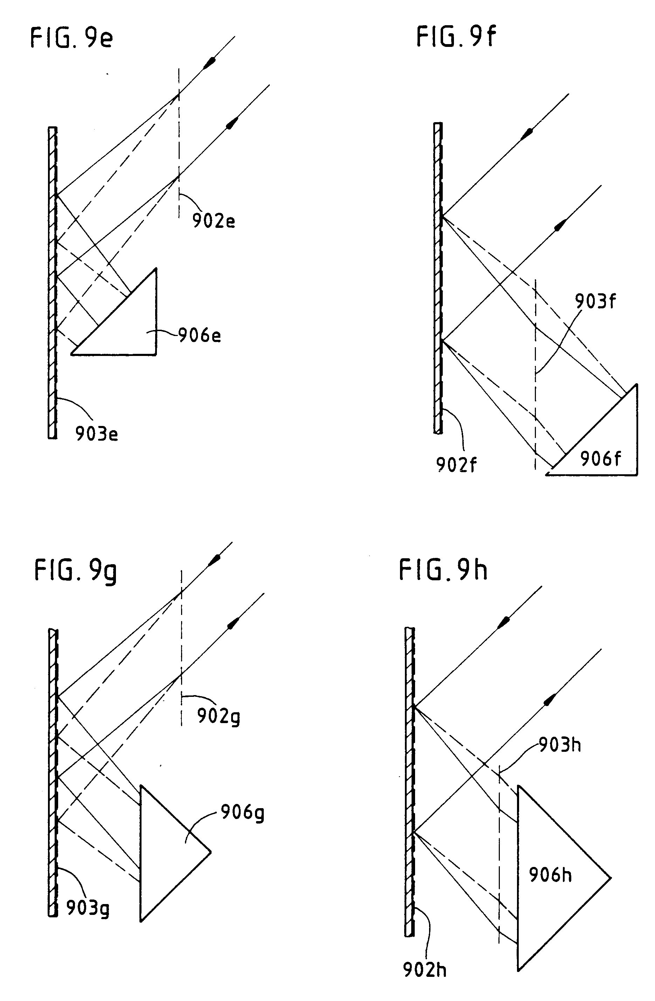

In Figur 9e ist eine Ausführungsform dargestellt, bei der ein Ablenkgitter 902e zwischen einer nicht dargestellten Beleuchtungseinrichtung und einem Reflexionsgitter 903e liegt und parallel zu dessen Ebene verläuft. Die Basis eines Tripelprismas 906e bildet zu beiden einen Winkel.

Ähnlich ist die Anordnung gemäß Figur 9f aufgebaut, hier befindet sich jedoch ein Ablenkgitter 903f zwischen der Basis eines Tripelprismas 906f und einem Reflexionsgitter 902f.

Schließlich zeigt Figur 9g eine Variante, bei der ein Ablenkgitter 902g zwischen einer nicht dargestellten Beleuchtungseinrichtung und einem Reflexionsgitter 903g angeordnet ist. Die Ebene des Reflexionsgitters 903g sowie das Ablenkgitter 902g und die Basis eines Tripelprismas 906g liegen zueinander parallel.

Beim letzten Ausführungsbeispiel liegt gemäß Figur 9h ein Ablenkgitter 903h im Strahlengang zwischen der Ebene eines Reflexionsgitters 902h und der Basis eines Tripelprismas 906h und zu diesen parallel.

Mit Hilfe der Figuren 10a und 10b soll noch deutlich gemacht werden, daß zur Ablenkung der Teilstrahlenbündel -φ und +φ nicht nur Beugungsgitter wie in den vorausgegangenen Beispielen, sondern gemäß Figur 10a auch Spiegel 1003 oder Prismen (siehe Figur 5, Position 503') verwendet werden können.

Ferner können als Aufspaltelemente teildurchlässige Spiegel 1002 oder dergleichen zur Erzeugung der Teilstrahlenbündel -φ und +φ verwendet werden, wie in Figur 10b angedeutet ist. Hier wurde nicht mit den Indizes a und b gearbeitet, denn es hätten die Spiegel 1003 und die Aufspaltelemente 1002 auch in einer einzigen Figur 10 gezeigt werden können.

Für die Bezugszeichen gilt, daß gleichartige Bauelemente lediglich mit einem Index versehen sind, der - wie üblich - auf die Figurenbezifferung bezogen ist. In den Patentansprüchen ist aus Gründen der Übersichtlichkeit jeweils nur das "Grundbezugszeichen" angegeben worden soweit nicht nur auf einzelne Ausführungsbeispiele Bezug genommen wurde.

## Patentansprüche

1. Positionsmeßeinrichtung mit einer Beleuchtungs- und einer Detektoreinrichtung zur Messung der Lage zweier relativ zueinander beweglicher Objekte mit Hilfe von Lichtstrahlbeugung an wenigstens einer Gitterteilung, dadurch gekennzeichnet, daß Teilstrahlenbündel (-φ, 0., +φ) mittels wenigstens eines Ablenkelements (3) so abgelenkt werden, daß sie konvergierend aus dem Ablenkelement (3) austreten, in wenigstens ein retroreflektierendes Element (6) eintreten und nach Durchlaufen des retroreflektierenden Elementes (6) divergierend wieder auf das Ablenkelement (3) auftreffen und so abgelenkt werden, daß sie interferieren können.

2. Positionsmeßeinrichtung nach Anspruch 1, dadurch gekennzeichnet, daß die gebeugten Teilstrahlenbündel (-φ, 0., +φ) von dem Ablenkelement (3) derart abgelenkt werden, daß sie nach Durchlaufen des retroreflektierenden Elementes (6) in an sich bekannter Weise zu sich selbst parallel, jedoch mit jeweils gleichem Abstand von den Austrittsorten in das Ablenkelement (3) wieder eintreten.

3. Positionsmeßeinrichtung nach Anspruch 1, dadurch gekennzeichnet, daß die Aus- und Eintrittsfelder der gebeugten Teilstrahlenbündel (-φ, 0., +φ) in Meßrichtung hintereinander liegen.

4. Positionsmeßeinrichtung nach Anspruch 3, dadurch gekennzeichnet, daß die gebeugten Teilstrahlenbündel (-φ, 0., +φ) in dem retroreflektierenden Element (6) derart umgelenkt werden, daß sie sich in einem einzigen Punkt schneiden.

5. Positionsmeßeinrichtung nach Anspruch 1, dadurch gekennzeichnet, daß die Aus- und Eintrittsfelder der gebeugten Teilstrahlenbündel (-φ, 0., +φ) in Meßrichtung nebeneinander liegen.

6. Positionsmeßeinrichtung nach Anspruch 5, dadurch gekennzeichnet, daß die Aus- und Eintrittsfelder nebeneinander auf zwei parallelen Beugungsgittern (602', 602'') liegen.

7. Positionsmeßeinrichtung nach Anspruch 6, dadurch gekennzeichnet, daß die parallelen Beugungsgitter (602', 602'') in Meßrichtung relativ zueinander verschieblich sind.

8. Positionsmeßeinrichtung nach Anspruch 1, dadurch gekennzeichnet, daß das retroreflektierende Element mit wenigstens einem optisch ablenkenden Umlenkelement (503', 503'') eine Baugruppe (506) bildet.

9. Positionsmeßeinrichtung nach Anspruch 8, dadurch gekennzeichnet, daß das retroreflektierende Element mit einem Beugungsgitter (503'') eine Baugruppe (506) bildet.

10. Positionsmeßeinrichtung nach Anspruch 8, dadurch gekennzeichnet, daß das retroreflektierende Element mit Prismen (503') eine Baugruppe (506) bildet.

11. Positionsmeßeinrichtung nach Anspruch 1 dadurch gekennzeichnet, daß das retroreflektierende Element (6) als Tripelspiegel oder Tripelprisma ausgebildet ist.

12. Positionsmeßeinrichtung nach Anspruch 1, dadurch gekennzeichnet, daß das Ablenkelement (3) und das retroreflektierende Element (6) ortsfest sind.

13. Positionsmeßeinrichtung nach Anspruch 1, dadurch gekennzeichnet, daß das Ablenkelement (403) beweglich und das retroreflektierende Element (406) ortsfest ist.

14. Positionsmeßeinrichtung nach Anspruch 1, dadurch gekennzeichnet, daß die Beleuchtungsrichtung unter einem Winkel zu der Richtung verläuft, die senkrecht zur Gitternormalen und Strichrichtung des Reflexionsgitters ist.

15. Positionsmeßeinrichtung nach Anspruch 1, dadurch gekennzeichnet, daß zur Erzeugung der Teilstrahlenbündel (-φ, 0., +φ) Aufspaltelemente in Form von Beugungsgittern (2) und/oder teildurchlässigen Spiegeln (1002) vorgesehen sind.

16. Positionsmeßeinrichtung nach Anspruch 1, dadurch gekennzeichnet, daß als Ablenkelemente Gitter (3) Prismen (503') und/oder Spiegel (1003) vorgesehen sind.

## Claims

1. Position-measuring installation with an illuminating and a detector arrangement for measuring the position of two-objects movable with respect to one another with the aid of light-beam diffraction at at least one grid division, characterised in that partial beams (-φ, 0., + φ) are deflected by means of at least one deflecting member (3) in such a way that they emerge from the deflecting member (3) in a convergent fashion, enter at least one retroreflecting member (6) and, after passing through the retroreflecting member (6), impinge again in a divergent fashion on the deflecting member (3), and are deflected in such a way that they can interfere.

2. Position-measuring installation according to claim 1, characterised in that the diffracted partial beams (-φ, 0., +φ) are deflected by the deflecting member (3) in such a way that, after passing through the retroflecting member (6), they again enter the deflecting member (3) in a way known per se parallel to themselves, yet with a respectively identical spacing apart from the points of exit.

3. Position-measuring installation according to claim 1, characterised in that the exit and entry fields of the diffracted partial beams (-φ, 0., +φ) lie one behind the other in the direction of measurement.

4. Position-measuring installation according to claim 3, characterised in that the diffracted partial beams (-φ, 0., +φ) are deflected in the retroreflecting member (6) in such a way that they intersect one another at a single point.

5. Position-measuring installation according to claim 1, characterised in that the exit and entry fields of the diffracted partial beams (-φ, 0., +φ) lie next to one another in the direction of measurement.

6. Position-measuring installation according to claim 5, characterised in that the exit and entry fields lie next to one another on two parallel diffraction grids (602', 602'').

7. Position-measuring installation according to claim 6, characterised in that the parallel diffraction grids (602', 602'') are displaceable relative to one another in the direction of measurement.

8. Position-measuring installation according to claim 1, characterised in that the retroreflecting member forms a constructive unit (506) with at least one optically-deflecting deflecting member (503', 503'').

9. Position-measuring installation according to claim 8, characterised in that the retroreflecting member forms a constructive unit (506) with a diffraction grid (503'').

10. Position-measuring installation according to claim 8, characterised in that the retroreflecting member forms a constructive unit (506) with prisms (503').

11. Position-measuring installation according to claim 1, characterised in that the retroreflecting member (6) is in the form of a triple reflector or triple prism.

12. Position-measuring installation according to claim 1, characterised in that the deflecting member (3) and the retroreflecting member (6) are stationary.

13. Position-measuring installation according to claim 1, characterised in that the deflecting member (403) is movable, and the retroreflecting member (406) is stationary.

14. Position-measuring installation according to claim 1, characterised in that the direction of illumination extends at an angle to the direction which is perpendicular to the grid normal and line direction of the reflection grid.

15. Position-measuring installation according to claim 1, characterised in that splitting members in the form of diffraction grids (2) and/or part-permeable mirrors (1002) are provided in order to generate the partial beams (-φ, 0., +φ).

16. Position-measuring installation according to claim 1, characterised in that grids (3), prisms (503') and/or mirrors (1003) are provided as deflecting members.

## Revendications

1. Dispositif de mesure de position comportant un dispositif d'éclairage et un dispositif de détection pour la mesure par diffraction de rayons lumineux sur au moins une graduation en réseau de la position de deux objets pouvant se déplacer l'un par rapport à l'autre, caractérisé par le fait que des faisceaux partiels (-φ, 0., +φ) sont déviés par au moins un élément de déviation (3) de manière telle que ceux-ci sortent convergents de l'élément de déviation (3), entrent dans au moins un élément rétro-réfléchissant (6) et, après avoir traversé l'élément rétro-réfléchissant (6), reviennent divergents sur le l'élément de déviation (3) où ils sont déviés de manière à devenir interférents.

2. Dispositif de mesure de position selon la revendication 1, caractérisé par le fait les faisceaux partiels diffractés (-φ, 0., +φ) sont déviés par l'élément de déviation (3) de manière telle que, après avoir traversé l'élément rétro-réfléchissant (6), ceux-ci reviennent à l'élément de déviation (3) de manière connue en soi parallèles à eux-mêmes, mais à distance constante chacun des points de sortie.

3. Dispositif de mesure de position selon la revendication 1, caractérisé par le fait que les zones de sortie et d'entrée des faisceaux partiels diffractés (-φ, 0., +φ) sont disposées l'une derrière l'autre dans la direction de mesure.

4. Dispositif de mesure de position selon la revendication 3, caractérisé par le fait que les faisceaux partiels diffractés (-φ, 0., +φ) sont déviés dans l'élément rétro-réfléchissant (6) de manière telle que ceux-ci se coupent en un point unique.

5. Dispositif de mesure de position selon la revendication 1, caractérisé par le fait que les zones de sortie et d'entrée des faisceaux partiels diffractés (-φ, 0., +φ) sont disposées l'une à côté de l'autre dans la direction de mesure.

6. Dispositif de mesure selon la revendication 5, caractérisé par le fait que les zones de sortie et d'entrée sont disposées l'une à côté de l'autre sur deux réseaux de diffraction (602', 602'') parallèles.

7. Dispositif de mesure de position selon la revendication 6, caractérisé par le fait que les réseaux de diffraction (602', 602'') parallèles peuvent se déplacer l'un par rapport à l'autre dans la direction de mesure.

8. Dispositif de mesure de position selon la revendication 1, caractérisé par le fait que l'élément rétro-réfléchissant forme un ensemble (506) avec au moins un élément de déviation (503', 503'') provoquant une déviation optique.

9. Dispositif de mesure de position selon la revendication 8, caractérisé par le fait que l'élément rétro-réfléchissant forme un ensemble (506) avec un réseau de diffraction (503'').

10. Dispositif de mesure de position selon la revendication 8, caractérisé par le fait que l'élément rétro-réfléchissant forme un ensemble (506) avec des prismes (503').

11. Dispositif de mesure de position selon la revendication 1, caractérisé par le fait que l'élément rétro-réfléchissant (6) est agencé sous forme de miroir triple ou de prisme triple.

12. Dispositif de mesure de position selon la revendication 1, caractérisé par le fait que l'élément de déviation (3) et l'élément rétro-réfléchissant (6) sont fixes.

13. Dispositif de mesure de position selon la revendication 1, caractérisé par le fait que l'élément de déviation (403) est mobile et l'élément rétro-réfléchissant (406) est fixe.

14. Dispositif de mesure de position selon la revendication 1, caractérisé par le fait que le dispositif d'éclairage forme un angle avec la direction perpendiculaire à la normale au réseau et à la direction des stries du réseau de réflexion.

15. Dispositif de mesure de position selon la revendication 1, caractérisé par le fait qu'il est prévu, pour produire les faisceaux partiels diffractés (-φ, 0., +φ), des éléments séparateurs qui se présentent sous la forme de réseaux de diffraction (2) et/ou des miroirs (1002) semi-transparents.

16. Dispositif de mesure de position selon la revendication 1, caractérisé par le fait qu'il est prévu, comme éléments de déviation, des réseaux (3), des prismes (503') et/ou des miroirs (1003).
